# EUROPÄISCHE PATENTSCHRIFT

(11) **EP 2 817 864 B1**
(45) Veröffentlichungstag und Bekanntmachung des Hinweises auf die Patenterteilung: **25.04.2018**
(21) Anmeldenummer: 13702355.2
(22) Anmeldetag: 15.01.2013
(51) Int. Cl.: H02J 7/00

(54) **VERFAHREN ZUR AUSBILDUNG EINER TRANSPORTSICHERUNG SOWIE AKKUBETRIEBENES ELEKTROGERÄT**
METHOD FOR FORMING A TRANSPORT SAFETY SYSTEM AND BATTERY-OPERATED ELECTRICAL DEVICE
PROCÉDÉ DE RÉALISATION D'UN SECURITE DE TRANSPORT ET APPAREIL ÉLECTRIQUE ALIMENTÉ PAR BATTERIE

(30) Priorität: 02.02.2012 DE 102012100866
(43) Veröffentlichungstag der Anmeldung: 31.12.2014
(73) Patentinhaber: Vorwerk & Co. Interholding GmbH, 42275 Wuppertal (DE)
(72) Erfinder: PETZOLD, Stefan, 42697 Solingen (DE)
(74) Vertreter: Müller, Enno
(86) Internationale Anmeldenummer: PCT/EP2013/050631
(87) Internationale Veröffentlichungsnummer: WO 2013/113546

(56) Entgegenhaltungen:
- EP-A2- 2 309 616
- WO-A1-2007/121533
- US-A1- 2010 109 765
- US-A1- 2011 006 736
- US-B1- 6 271 605

## Beschreibung

Die Erfindung betrifft zunächst ein Verfahren zur Ausbildung einer Transportsicherung nach den Merkmalen des Oberbegriffs des Anspruches 1.

Die Erfindung betrifft darüber hinaus ein akkumulatorbetriebenes Elektrogerät nach den Merkmalen des Oberbegriffes des Anspruches 2.

Die Erfindung betrifft schließlich eine Kombination aus einem Ladegerät für ein akkumulatorbetriebenes Elektrogerät und einem akkumulatorbetriebenen Elektrogerät nach den Merkmalen des Oberbegriffs des Anspruches 6.

Es sind Elektrogeräte, die über einen Akkumulator betrieben werden, bekannt, bei welchen der Akkumulator aus dem Elektrogerät entnehmbar ist und über einen Netzanschluss, gegebenenfalls über eine gesonderte Ladestation, aufzuladen ist. Andererseits sind Elektrogeräte bekannt, bei welchen der Akkumulator ständig in dem Elektrogerät verbunden ist und über einen Netzanschluss des Elektrogerätes wieder aufladbar ist. In beiden Fällen besteht die Problematik, dass einerseits gewünscht wird, dass der Benutzer das Elektrogerät unmittelbar nach einem Kauf auch benutzen kann. Dies erfordert, dass der Akkumulator vollständig geladen ist. Andererseits kann aber durch Auslösen eines elektrischen Kontaktes auf dem Transportweg eine Entladung des Akkumulators eintreten. Um letzteres zu verhindern, sind die angesprochenen Transportsicherungen bekannt. Diese können zum einen darin bestehen, dass eine Betätigungstaste an dem Elektrogerät, mit dem dieses zu aktivieren ist, blockiert ist. Der Benutzer muss die Blockade zunächst bewusst entfernen. Die Blockierung kann bspw. im einfachsten Fall aus einem über eine Taste geklebtes Etikett bestehen. Andererseits, insbesondere für aus dem Elektrogerät entnehmbare Akkumulatoren, ist es auch bekannt, eine Steckeröffnung an dem Akkumulator durch ein Etikett oder ein Klebeband zu verschließen, das dann zum ersten Einstecken auch zunächst zu entfernen ist.

Diese bekannten Transportsicherungen sind einerseits herstellungstechnisch noch nicht zufriedenstellend. Es kann zu Fehlern kommen, wenn etwa das Blockademittel nicht eingelegt wird oder sich vorzeitig löst. Andererseits wird eine solche Transportsicherung auch auf Benutzerseite noch nicht als optimal empfunden. Es können Überreste beim Entfernen eines Etiketts beispielsweise zurückbleiben. Mitunter ist auch nicht auf Anhieb verständlich, welche Maßnahme zum Entfernen der Transportsicherung erforderlich ist.

Aus der US 2010/0109765 A1 ist es bekannt, ein Gerät hinsichtlich des Akkumulators in einen Zustand zu versetzen, der bei einem Transport eine Selbstentladung des Akkumulators möglichst weitgehend reduziert. Die Versetzung in diesen Zustand wird durch Funkbetätigung vorgenommen.

Eine vergleichbare Ausgestaltung ist auch aus der US 2011/006736 A1 bekannt.

Aus der US 6,271,605 B1 ist es bekannt, dass ein geladener Akkumulator vollständig von dem Verbraucher getrennt wird.

Ausgehend von dem genannten Stand der Technik beschäftigt sich die Erfindung mit der Aufgabe, eine günstige Ausgestaltung hinsichtlich einer Transportsicherung eines akkumulatorbetriebenen Elektrogerätes anzugeben. Weiter auch mit der Aufgabe, eine diesbezügliche vorteilhafte Kombination aus einem Lagegerät und einem Elektrogerät anzugeben.

Diese Aufgabe ist zunächst beim Gegenstand des Anspruches 1 gelöst, wobei darauf abgestellt ist, dass mit der Transportsicherung bewirkt wird, dass eine gewollte oder ungewollte Betätigung eines Aktivierungstasters des Elektrogerätes nicht zu einem Aktivieren der Elektrokomponenten des Gerätes führt und dass die Transportsicherung durch eine an dem Gerät vorgesehene Tastenbetätigung aktiviert wird.

Die Aufgabe ist auch gegenständlich beim Gegenstand des Anspruches 2 gelöst, wobei darauf abgestellt ist, dass mit der Transportsicherung eine gewollte oder ungewollte Betätigung eines Aktivierungstaster des Elektrogerätes nicht zu einem Aktivieren der Elektrokomponenten des Gerätes führt und dass die Transportsicherung durch eine an dem Gerät vorgesehene Tastenbetätigung aktivierbar ist.

Schließlich ist die Aufgabe auch beim Gegenstand des Anspruches 6 gelöst, wobei hinsichtlich der dort betroffenen Kombination aus Ladegerät und Elektrogerät darauf abgestellt ist, dass die Entladeschutzschaltung einen die Spannungsversorgung des Gerätes unterbrechenden, mechanischen Schalter aufweist und dass das Ladegerät ein Einwirkungsteil aufweist, zur Betätigung des Schalters.

Zur Aktivierung der Transportsicherung erfolgt ein schaltungstechnischer Eingriff, der im Zuge einer üblichen Handhabung des Gerätes, nämlich einem üblichen (ersten) Laden des Akkumulators, selbsttätig, durch Auslösen des Ladevorganges, aufgehoben wird. Ein Benutzer, der ein solches Elektrogerät mit einem beispielsweise vollständig geladenen Akkumulator erwirbt, wird bei einem ersten Versuch, das Gerät zu aktivieren, erkennen, dass das Gerät nicht in Gang zu setzen ist. Er wird dies der mangelnden Ladung des Akkumulators zuschreiben und in üblicher Weise einen Ladevorgang auslösen. Entweder durch Einstecken eines Netzkabels in das Gerät als solches oder durch Herausnehmen des Akkumulators und dessen gesonderte Aufladung, insbesondere in einer Ladestation. Hierdurch deaktiviert er aber zugleich die Transportsicherung, so dass im Folgenden das Gerät in üblicher Weise uneingeschränkt nutzbar ist. Wenn der Ladezustand des Akkumulators, beispielsweise durch eine grüne Lampe, angezeigt wird, kann er auch sogleich nach dem Beginn eines Ladevorganges erkennen, dass der Akkumulator tatsächlich geladen ist und das Gerät betriebsbereit ist. Das Elektrogerät oder der Akkumulator brauchen sich in ihrer äußeren Beschaffenheit nicht von einem späteren Benutzungszustand zu unterscheiden. Der Benutzer muss keinerlei Handhabung vornehmen, die er nicht bei einer üblichen Benutzung des Gerätes oder des Akkumulators auch vornehmen müsste. Dem Benutzer wird oftmals auch nicht einmal bewusst werden, dass er durch Auslösen eines Ladevorgangs die Transportsicherung des Akkumulators deaktiviert hat.

Es ergeben sich auch herstellungsmäßig wesentliche Vorteile. Das akkumulatorbetriebene Elektrogerät kann bereits mit einem ordnungsgemäß vorgeladenen Akkumulator verpackt werden. Fehlhandlungen eines Benutzers bei einem ersten Laden des Akkumulators können nicht mehr auftreten. Eine gewollte oder ungewollte Betätigung eines Aktivierungstasters oder -schalters des Elektrogerätes, bspw. im Verpackungszustand des Gerätes, führt entsprechend nicht zu einem Aktivieren der Elektrokomponenten des Gerätes, bspw. eines hierin angeordneten Elektromotors. Der Aktivierungstaster oder -schalter kann auch unmittelbar an einem, dann bevorzugt entnehmbaren, Akkumulator vorgesehen sein.

Bevorzugt kann auch sogleich die herstellerseitig dann vorzunehmende erste Aufladung des Akkumulators dazu genutzt werden, die Transportsicherung zu aktivieren.

Ein akkumulatorbetriebenes Elektrogerät kann mit einem vorgeladenen Akkumulator verpackt werden. Diese entsprechend ohnehin vorgesehene Aufladeprozedur kann dazu genutzt werden, die Transportsicherung zu aktivieren. Eine gewollte oder ungewollte Betätigung eines Aktivierungstasters oder -schalters des Elektrogerätes, bspw. im Verpackungszustand des Gerätes, führt entsprechend nicht zu einem Aktivieren der Elektrokomponenten des Gerätes, bspw. eines hierin angeordneten Elektromotors. Der Benutzer wird insbesondere bei einer Erstbenutzung des Elektrogerätes nach Entnahme aus der Verpackung und Betätigen des Aktivierungsschalters bzw. -tasters feststellen, dass das Elektrogerät keine Funktion zeigt und unternimmt den naheliegenden Schritt eines Ladeversuchs des in dem Elektrogerät vorgesehenen Akkumulators. Hierdurch wird die eigentliche Ursache, nämlich die Transportsicherung, deaktiviert.

Es ist bevorzugt, dass das Elektrogerät und/oder ein mit dem Elektrogerät oder einem Akkumulator des Elektrogeräts zusammenschaltbares Ladegerät und/oder der Akkumulator selbst einen Microcontroller aufweist und dass der Microcontroller bei Erfassen eines Ladestroms die Transportsicherung deaktiviert. Das Elektrogerät selbst oder auch alternativ das Ladegerät oder der Akkumulator verfügt entsprechend über einen Controller. Dieser überwacht u.a. das Anliegen einer Ladespannung wie sie beim Aufladen des Akkumulators gegeben ist. Diese Information kombiniert der Controller bevorzugt rein softwaregesteuert mit jedem beliebigen weiteren Ereignis, das zur Auslösung bzw. Aktivierung der Transportsicherung dient. Erfasst hingegen der Microcontroller einen Ladestrom bei entsprechendem Anschluss des Elektrogerätes, insbesondere des Akkumulators mit dem Ladegerät, jedoch nicht ein Ereignis, das zu der Aktivierung der Transportsicherung führt, so löst der Microcontroller bevorzugt die Deaktivierung der Transportsicherung aus. Hierbei ist insbesondere hinsichtlich der Aktivierung der Transportsicherung in bevorzugter Ausgestaltung die Reihenfolge und Dauer der Ereignisse, insbesondere die Reihenfolge von Verbindung zum Ladegerät und Auslösen des weiteren, durch den Microcontroller erfassbaren Ereignisses von Bedeutung.

Die Transportsicherung besteht in einer Ausführungsform aus einem die Spannungsversorgung des Elektromotors bzw. elektrischen Verbrauchers des Geräts bzw. von Ausgangspolen des Akkumulators unterbrechenden Schalter. Der Schalter ist bevorzugt ein üblicher, in der Versorgungsleitung zwischen Akkumulator und zu versorgendem elektrischen Bauteil geschalteter mechanischer Schalter oder dergleichen (bspw. ein Relais mit Selbsthaltung), welcher insbesondere über den Microcontroller aktivier- bzw. deaktivierbar ist. Bevorzugt wird diesbezüglich eine Ausgestaltung, bei welcher der Schalter durch ein elektronisches Schaltelement gebildet ist, welches weiter bevorzugt innerhalb des Microcontrollers vorgesehen ist, jedoch auch als diskretes Bauteil vorliegen kann.

Besonders vorteilhaft erweist sich die vorgeschlagene Lösung auch dahingehend, dass die Transportsicherung wahlweise aktivierbar ist, so entsprechend auch nach einem ersten Gebrauch durch den Benutzer, bspw. im Hinblick auf einen Transport des Elektrogerätes mit dem Akkumulator, oder gesondert. Der Benutzer aktiviert hierbei die Transportsicherung bei Bedarf in derselben Art, wie dies bei der erstmaligen, fertigungsseitigen Aktivierung erfolgt ist, indem der Benutzer das Gerät bzw. den Akkumulator elektrisch mit dem Ladegerät verbindet und hiernach das weitere Ereignis auslöst. Auch diese wahlweise Wiederaktivierung der Transportsicherung ist in vorteilhafter Weise durch den Microcontroller gesteuert.

Hinsichtlich der Aktivierung der Transportsicherung durch eine Tastenbetätigung kann geräteseitig eine gesonderte Taste vorgesehen sein, deren Betätigung das durch den Microcontroller erfassbare weitere Ereignis bietet. In einer bevorzugten Ausgestaltung ist die Taste zur Aktivierung der Transportsicherung zugleich auch die Taste zum Aktivieren des Elektrogerätes nach Aufheben der Transportsicherung. In diesem Zusammenhang ist weiter bevorzugt, dass die zur Aktivierung der Transportsicherung erforderliche Tastenbetätigung abweichend von einer zur Betätigung des Gerätes üblichen Tastenbetätigung gewählt ist. So ist diesbezüglich bevorzugt vorgesehen, dass die Tastenbetätigung zur Aktivierung der Transportsicherung sich hinsichtlich der Betätigungsdauer zu der üblichen Tastenbetätigung zum Einschalten des Gerätes unterscheidet. Auch ist diesbezüglich bevorzugt vorgesehen, die Aktivierung der Transportsicherung durch eine Tastenkombination herbeizuführen, so bspw. morsecodeartiges Betätigen der Taste.

Weiter auf Seite 8, oben, der ursprünglich eingereichten Unterlagen
Die vorgeschlagene Erfindung schützt akkumulatorbetriebene Geräte vor versehentlichem Aktivieren oder Entladen des Akkumulators während des Transports des Gerätes, wobei diesbezüglich ohne zusätzliche Hilfsmittel, die bspw. später vom Benutzer entfernt und entsorgt werden müssen, eine Transportsicherung vorgesehen ist. Diese wird bevorzugt über dieselbe und einzige Taste des Gerätes aktiviert, die auch zum Bedienen des Elektrogerätes benötigt wird. Die Transportsicherung wird beim Benutzer selbsttätig deaktiviert, ohne dass der Benutzer eine für ihn nicht intuitiv zu verstehende oder nicht naheliegende Handlung vollführen muss. Die Transportsicherung lässt sich durch eine Kombination von Vorhandensein des Ladegeräts und einem bevorzugt längeren, vorzugsweise mehrere Sekunden anhaltenden Druck auf die Bedientaste aktivieren. Das Ladegerät muss hierbei an das Gerät und bevorzugt an das Haushalts-Stromnetz angeschlossen sein. Das Gerät geht hiernach selbsttätig in den Lademodus und erkennt damit diesen Zustand. Im Lademodus wird die Aktivierung der Gerätefunktion (Entladung des Akkumulators) verhindert, wobei das Gerät weiter bevorzugt bspw. durch kurzes Aufblinken eines Leuchtmittels signalisiert, dass dieses nicht für den Betrieb bereit ist. Wird der Taster nun trotz des Signals weiter festgehalten, signalisiert ggf. ein weiteres optisches oder auch akustisches Signal, das die Transportsicherung eingelegt worden ist. Nach Entfernen des Ladegerätes zeigt das Gerät auf beliebige Tastendrücke keine Reaktion. Der Transportschutz deaktiviert sich automatisch beim nächsten Verbinden mit dem Ladegerät und kann beliebig oft wieder aktiviert werden.

Alternativ zu einem langen Drücken des Tasters zur Aktivierung der Transportsicherung kann auch eine andere Sequenz zum Bedienen des Tasters gewählt werden. Die Ereignisse "Niederdrücken" und "Loslassen" erfolgen hierbei bevorzugt in einem bestimmten Zeitfenster. Die Sequenz kann weiter bevorzugt auf mehrere aufeinanderfolgende Ereignisse mit mehreren Zeitfenstern erweitert werden, die die Möglichkeit unwahrscheinlich macht, dass der Benutzer diese in dieser zeitlichen Abfolge während des Anschlusses des Gerätes an dem Ladegerät drücken wird.

In weiter bevorzugter Ausgestaltung werden die Ereignisse "Niederdrücken" und "Loslassen" durch eine zufallsgesteuerte Abfolge von Blinksequenzen gefordert, auf die durch den Benutzer in einem bestimmten Zeitfenster reagiert werden muss. Hierbei müssen die zufällig durch Blinkmuster signalisierten Muster durch Betätigen des Tasters in derselben Abfolge in einem bestimmten Zeitfenster durch den Benutzer nachvollzogen werden.

Bevorzugt wird ein akkumulatorbetriebenes Elektrogerät bereits mit einem vorgeladenen Akkumulator verpackt, wobei bei der ohnehin vorgesehenen Aufladeprozedur die Transportsicherung bevorzugt bereits aktiviert ist. Eine gewollte oder ungewollte Betätigung eines Aktivierungselements, beispielsweise Tasters oder Schalters des Elektrogerätes, führt beispielsweise im Verpackungszustand des Gerätes nicht zu einem Aktivieren der Elektrokomponenten des Gerätes. Der Benutzer wird insbesondere bei einer Erstbenutzung des Elektrogerätes nach Entnahme aus der Verpackung und Betätigung des beispielsweise einen Elektromotor aktivierenden Schalters oder Tasters feststellen, dass das Elektrogerät keine Funktion zeigt. Hieraufhin unternimmt der Benutzer den naheliegenden Schritt eines Ladeversuchs des geräteseitigen Akkumulators an dem Ladegerät, wobei die eigentliche Ursache, nämlich die Transportsicherung, deaktiviert wird.

Es ist weiter bevorzugt, dass die Entladeschutzschaltung einen die Spannungsversorgung des Gerätes unterbrechenden, mechanischen Schalter aufweist und dass das Ladegerät ein Einwirkungsteil aufweist, zur Betätigung des Schalters. Hierbei handelt es sich bevorzugt um einen gesonderten, weiter bevorzugt von außen insbesondere durch den Benutzer nicht zugänglichen Schalter, entsprechend weiter bevorzugt nicht um einen Schalter zur üblichen Aktivierung des Elektrogeräts. Entsprechend sind zur Aktivierung des Elektrogerätes, weiter insbesondere zur Nutzung desselben, zumindest zwei Schalter in eine elektrische Schließposition zu verlagern, nämlich zum einen der übliche Aktivierungsschalter, der durch den Benutzer zu betätigen ist, und des Weiteren der bevorzugt geräteinterne Schalter, der in der Transportsicherungsstellung die Spannungsversorgung des Gerätes, insbesondere des in dem Gerät vorhandenen Elektromotors oder dergleichen unterbricht. Dieser Unterbrechungsschalter wird mit Zuordnung des Elektrogerätes zu dem Ladegerät bevorzugt selbsttätig in die Transportsicherungs-Deaktivierungsstellung verlagert, d.h. weiter bevorzugt in eine Schließposition desselben. Hierzu weist das Ladegerät ein Einwirkungsteil auf, so insbesondere einen in der Zuordnungsstellung des Elektrogerätes zu dem Ladegerät in das Elektrogerät eingreifendes und hier den Schalter beaufschlagendes Teil. Bei dem Einwirkungsteil handelt es sich bevorzugt um ein gegenüber einer Kontaktfläche des Ladegerätes zu dem Elektrogerät exponiertes Teil, weiter bevorzugt ein gehäuseseitiges Teil des Ladegerätes,
beispielsweise ein stabförmiges Teil, welches durch eine entsprechend vorgesehene Öffnung des Elektrogerätes in das Innere zum Betätigen des diesbezüglichen Schalters greift. Mit Zuordnung des Elektrogerätes zu dem Ladegerät wird entsprechend selbsttätig und weiter bevorzugt ohne weitere Maßnahme durch den Benutzer die Transportsicherung deaktiviert, wobei diese Schalterstellung selbsttätig beibehalten wird.

In weiterer Ausgestaltung ist die Transportsicherung bevorzugt wahlweise aktivierbar, so weiter beispielsweise zufolge eines auf den Transportsicherungsschalter einwirkenden Beeinflussungselements, welches vom Benutzer betätigbar ist. Ein solches Beeinflussungselement, beispielsweise in Form eines Schiebe- oder Druckelements, ist hierbei lediglich zur Aktivierung der Transportsicherung, entsprechend zum Öffnen des Schalters ausgelegt, nicht jedoch zur Beeinflussung des Schalters in der Transportsicherung. Auch kann die Transportsicherung zufolge entsprechender Maßnahmen an dem Ladegerät aktivierbar sein.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in perspektivischer Darstellung ein Elektrogerät in Form eines akkumulatorbetriebenen Handstaubsaugers sowie ein Ladegerät für das Elektrogerät;
- Fig. 2: das Elektrogerät in der dem Ladegerät zugeordneten Stellung zur Aufladung des geräteseitigen Akkumulators;

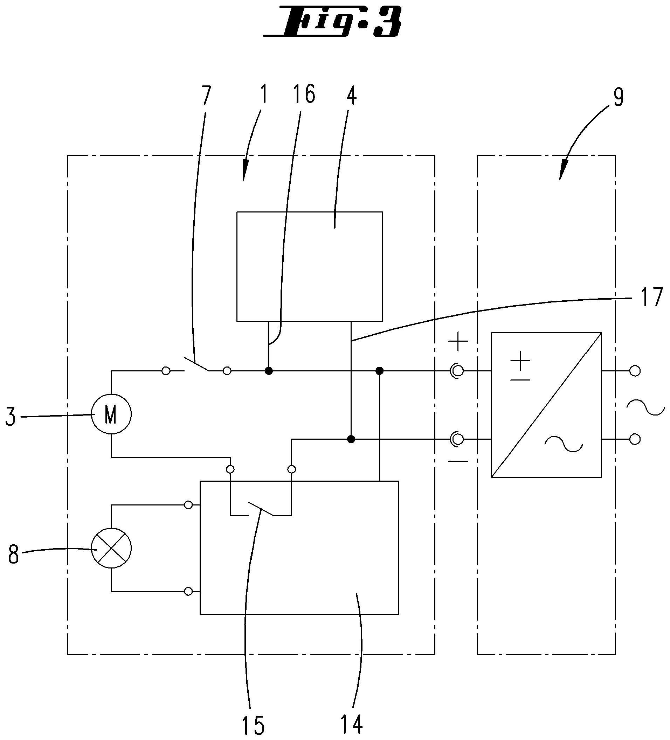

- Fig. 3: ein schematisches Schaltbild einer Schaltungsanordnung zur Aktivierung und Deaktivierung einer Transportsicherung des Gerätes;
- Fig. 4: eine der Fig. 3 entsprechende Darstellung, eine alternative Ausführungsform in der Transportsicherung betreffend;
- Fig. 5: eine der Fig. 4 entsprechende Darstellung, bei Deaktivierung der Transportsicherung.

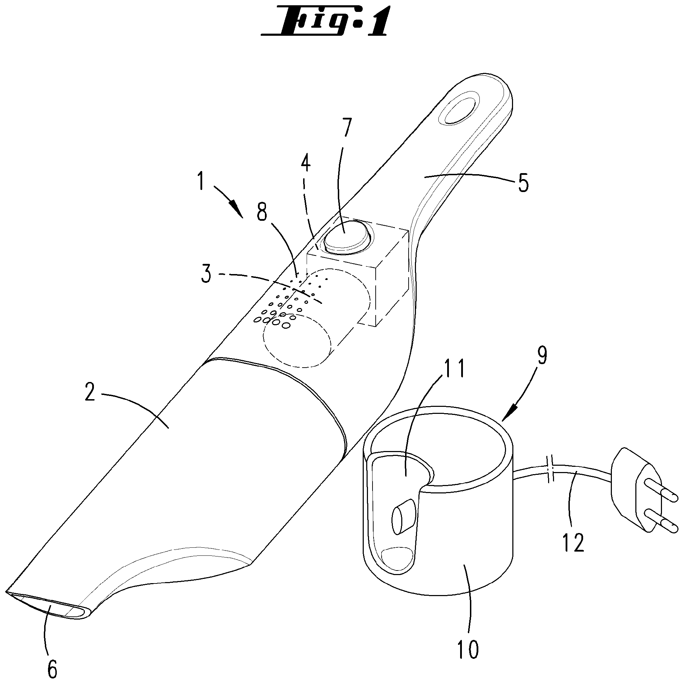

Dargestellt und beschrieben ist zunächst mit Bezug zu Fig. 1 ein Elektrogerät 1 in Form eines handgeführten, akkumulatorbetriebenen Staubsaugers, insbesondere zur Absaugung von Überbodenflächen, wie bspw. Tisch- oder Arbeitsflächen.

Das Elektrogerät 1 weist hierzu einen in einem Gehäuse 2 aufgenommenen Elektromotor 3 auf, welcher in dem dargestellten Ausführungsbeispiel insbesondere als Elektro-Sauggebläsemotor ausgebildet ist. Die elektrische Versorgung des Elektromotors 3 ist erreicht durch einen gleichfalls in dem Gehäuse 2 angeordneten, bevorzugt zumindest nicht werkzeuglos aus dem Gehäuse 2 entnehmbaren Akkumulator 4.

Weiter, wenngleich nicht dargestellt, ist in dem Gehäuse 2 eine Staubsammelkammer oder ein Staubfilterbeutel angeordnet, zur Ausfilterung von Staubund Schmutzpartikeln aus dem durch den Sauggebläsemotor erzeugten, weiter durch einen durch das Gehäuse 2 geführten Saugkanal geleiteten Saugluftströmung, welche gegenüberliegend zu einem stielartigen Handgriffbereich 5 durch eine Saugmundöffnung 6 einströmt. Zur Aktivierung des Elektrogerätes 1 ist im Bereich des Handgriffes 5 eine Taste 7 vorgesehen.

Weiter ist in der Gehäusewandung eine bei Betrieb des Gerätes im Blickbereich des Benutzers liegende Leuchtanzeige 8 vorgesehen, welche insbesondere zur optischen Signalisierung des ordnungsgemäßen Ladezustands des Akkumulators 4 und/oder als Betriebsbereitschaftsanzeige dient.

Zur Aufladung des Akkumulators 4 ist weiter ein Ladegerät 9 vorgesehen. Dieses beinhaltet in bevorzugter und üblicher Weise zumindest einen Transformator zur Wandlung einer Netzspannung in eine gleichgerichtete Spannung.

Das Gehäuse 10 des Ladegerätes 9 ist mit einer an die Querschnittskontur des Handgriffbereiches 5 des Elektrogerätes 1 angepassten Ausnehmung 11 versehen, insbesondere zur formschlüssigen Aufnahme des Handgriffbereiches 5 in der Ladestellung.

Im Bereich der Ausnehmung 11 sind nicht näher dargestellte Elektrokontakte positioniert, zur Zusammenwirkung mit entsprechenden Gegenkontakten im Bereich des Handgriffes 5, welch letztere zum Akkumulator 4 geführt sind.

Die Stromversorgung des Ladegerätes 9 erfolgt über ein Netzkabel 12 zum Anschluss des Ladegerätes 9 an eine Steckdose 13, insbesondere des Haushalts-Stromnetzes.

Es ist eine Transportsicherung vorgesehen, insbesondere für den in dem Elektrogerät 1 installierten Akkumulator 4. Diese Transportsicherung ist aktivierbar sowie deaktivierbar in der Zuordnungsstellung des Elektrogerätes 1, insbesondere des Akkumulators 4 zu dem Ladegerät 9.

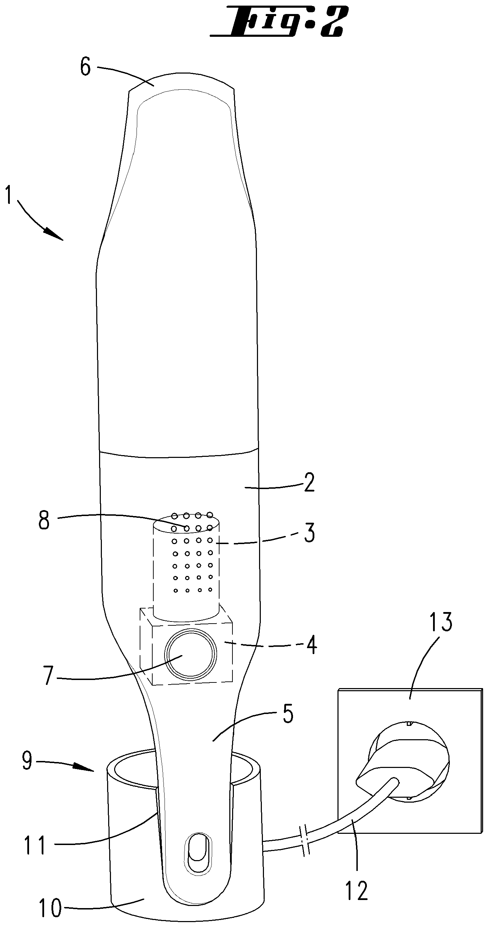

Hierzu verfügt das Elektrogerät 1 weiter über einen in dem Gerät installierten Microcontroller 14. Dieser überwacht unter anderem in der Ladestellung des Elektrogerätes 1 gemäß Fig. 2 auch das Anliegen einer Ladespannung zum Aufladen des geräteseitigen Akkumulators 4. Diese Information bzw. diesen Ladezustand kombiniert der Microcontroller bevorzugt rein softwaregesteuert mit einem weiteren Ereignis, so bevorzugt mit dem Drücken der Taste 7 über einen längeren, bevorzugt vorgegebenen Zeitraum. Diese Tastenbetätigung erfolgt bevorzugt über die geräteseitige Taste 7, welche auch zum üblichen Betrieb des Elektrogerätes 1 genutzt wird.

Zur Aktivierung der Transportsicherung wird das Elektrogerät 1, weiter insbesondere der Akkumulator 4 in die Ladebetriebsstellung zum Ladegerät 9 verbracht, so insbesondere zufolge Einstecken bzw. Einstellen des Handgriffbereiches 5 des Elektrogerätes 1 in den Bereich der ladegerätseitigen Ausnehmung 11, welches Ladegerät 9 wiederum bevorzugt an das Haushalts-Stromnetz angeschlossen ist. In diesem Lademodus wird die Aktivierung der Gerätefunktion des Elektrogerätes 1 und somit das Entladen des Akkumulators 4 bevorzugt unterbunden. Das Elektrogerät 1 signalisiert hierbei bevorzugt zufolge Blinken der Leuchtanzeige 8, dass dieses nicht für den Betrieb bereit ist. Zur Aktivierung der Transportsicherung wird in dieser Stellung die Taste 7 bevorzugt über einen mehrere Sekunden, weiter bevorzugt 5 Sekunden langen Zeitraum gedrückt gehalten. Diese Betätigung über den bevorzugt vorgegebenen Zeitraum wird durch den Microcontroller 14 erfasst, was zum Öffnen eines die Spannungsversorgung des Elektromotors 3 des Gerätes 1 unterbrechenden Schalters 15 zur Folge hat. Die Spannungsversorgung des Elektromotors 3 erfolgt über eine Entladeschutzschaltung des Akkumulators bzw. beim Ausführungsbeispiel des Elektrogerätes 1. Die Entladeschutzschaltung besteht in einfachster Weise aus zwei Leitungen 16, 17, welche über den Akkumulator spannungsversorgt sind und sogleich zum Anlegen der Spannung, gegebenenfalls vermittels Ausgangspolen des Akkumulators, an den Elektromotor M dienen. Die Leitung 17 ist mit dem Schalter 15 ausgebildet und kann so zur Erreichung der Transportsicherung unterbrochen werden. Dieser Schalter 15 ist bevorzugt ein elektronisches Bauelement, welches in dem Microcontroller 14 integriert ist. Die aktivierte Transportsicherung wird hiernach bevorzugt durch ein Signal der Leuchtanzeige 8 angezeigt.

Der Schalter 15 verbleibt in seiner Offenstellung bis die Transportsicherung wieder deaktiviert ist. In der aktivierten Transportsicherungsstellung zeigt das Elektrogerät 1 nach dem Entfernen von dem Ladegerät 9 auf jeden beliebigen Tastendruck oder auch jede beliebige Tastendrucklänge keine Reaktion.

Eine Deaktivierung der Transportsicherung erfolgt selbsttätig beim nächsten Verbinden des Elektrogerätes 1, insbesondere des Akkumulators 4 mit dem Ladegerät 9, wobei aus der aktivierten Transportsicherungsstellung heraus bei einem Wiederanschluss an das Ladegerät 9 der Microcontroller 14 der Schalter 15 schließt, wonach entsprechend nach Abnahme von dem Ladegerät 9 das Elektrogerät 1 zufolge Betätigung der Taste 7 in Betrieb nehmbar ist.

Die Aktivierung der Transportsicherung ist bevorzugt jederzeit durch den Benutzer wieder herbeiführbar, indem dieser das Elektrogerät 1, insbesondere den Akkumulator 4 an das Ladegerät 9 anschließt und in dieser Stellung die vorgegebene Tastenkombination bzw. ein Drücken der Taste 7 über eine vorgegebene Dauer vornimmt.

Die Transportsicherung wird entsprechend aktiviert, wenn das Ladegerät 9 an den Akkumulator 4 angeschlossen ist, die Taste 7 bevorzugt länger als 5 Sekunden gedrückt wird und hiernach das Ladegerät 9 wieder entfernt ist. Dies ist kein Ereignis, das versehentlich herbeigeführt werden kann. Entsprechend ist die Transportsicherung nur willensbetont aktivierbar.

Zum Deaktivieren der Transportsicherung wird der Akkumulator 4 des Elektrogerätes 1 erneut mit dem über das Haushaltsnetz stromversorgten Ladegerät verbunden, was bei einem Transport des Elektrogerätes 1 nicht möglich ist, jedoch in der täglichen Benutzung des Elektrogerätes 1 üblich ist.

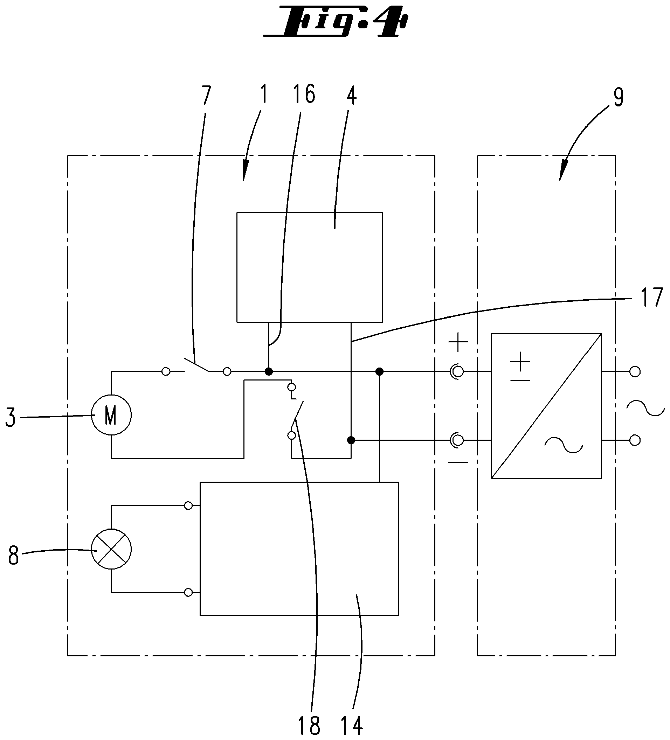

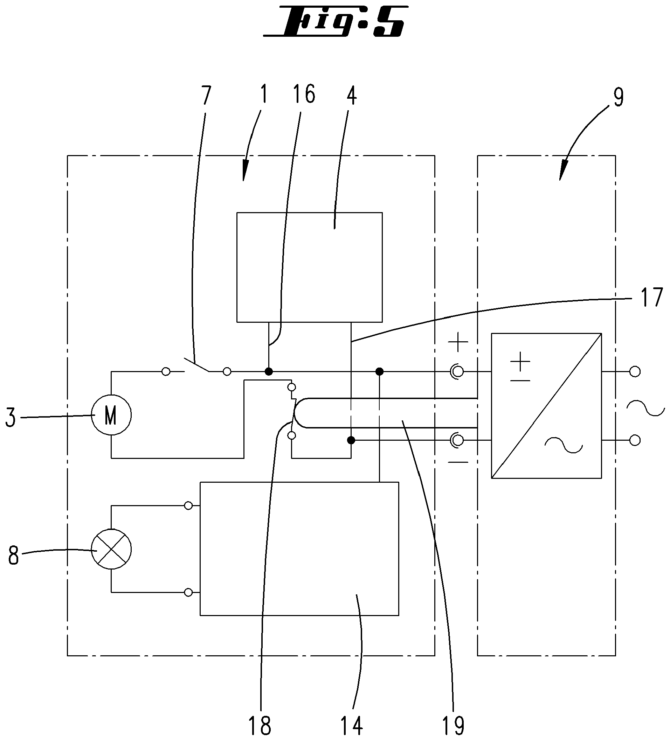

Die Fig. 4 und 5 zeigen eine weitere Ausführungsform, bei welcher die Transportsicherung mechanisch deaktivierbar ist.

Hier ist in der Leitung 17 der Entladeschutzschaltung ein mechanischer Schalter 18 eingebunden. Dieser ist voreingestellt in einer Offenstellung gemäß der Darstellung in Fig. 4, in welcher Offenstellung des Schalters 18 eine (erste) Aufladung des Akkumulators 4 über das Ladegerät 9 erreicht werden kann. Bei dem Ladegerät 9 insbesondere zur Erst-Aufladung des Akkumulators 4 handelt es sich bevorzugt um ein allein für diese Zwecke ausgelegtes Ladegerät.

Das dem Elektrogerät 1 zuordbare Ladegerät gemäß der Darstellung in Fig. 5, entsprechend das Ladegerät 9, dem das Elektrogerät 1 nach einer Erstaufladung zuordbar ist, weist ein Einwirkungsteil 19 auf. Hierbei handelt es sich um ein stiftartiges Teil, welches sich bevorzugt vom Ladegerätgehäuse bzw. einer Aufstand- oder Anlagefläche für das Elektrogerät frei hinaus erstreckt, zur Durchsetzung einer nicht dargestellten Gehäuseöffnung in dem Elektrogerät.

Bei ordnungsgemäßem Ansetzen des Elektrogerätes 1 an das Ladegerät 9 gemäß der Darstellung in Fig. 5 erfolgt über das Einwirkungsteil 19 eine Beaufschlagung des Schalters 18, so dass dieser in eine elektrische Schließstellung verlagert ist. Der Schalter 18 ist hierbei so ausgelegt, dass diese Schließstellung selbsttätig beibehalten wird, auch nach Entfernen des Elektrogerätes 1 vom Ladegerät 9.

Entsprechend ist mit einem Ansetzen des Elektrogerätes 1 an das Ladegerät 9 eine selbsttätige Deaktivierung der Transportsicherung erreicht, dies entsprechend zufolge mechanischer Verlagerung des Schalters 18 in die Schließstellung.

### Bezugszeichenliste:

- 1: Elektrogerät
- 2: Gehäuse
- 3: Elektromotor
- 4: Akkumulator
- 5: Handgriffbereich
- 6: Saugmundöffnung
- 7: Taste
- 8: Leuchtanzeige
- 9: Ladegerät
- 10: Gehäuse
- 11: Ausnehmung
- 12: Netzkabel
- 13: Steckdose
- 14: Microcontroller
- 15: Schalter
- 16: Leitung
- 17: Leitung
- 18: Schalter
- 19: Einwirkungsteil

- M: Elektromotor

## Patentansprüche

1. Verfahren zur Ausbildung einer Transportsicherung bei einem über einen Akkumulator (4) betriebenen Elektrogerät (1), zur Verhinderung einer Entladung des Akkumulators (4) beispielsweise auf einem Transportweg, wobei der Akkumulator (4) oder das Elektrogerät (1) eine elektrische Entladeschutzschaltung aufweist und die Transportsicherung durch eine Beeinflussung der Entladeschutzschaltung aktiviert wird und durch ein nachfolgendes Laden des Akkumulators (4) deaktiviert wird **dadurch gekennzeichnet, dass** mit der Transportsicherung bewirkt wird, dass eine gewollte oder ungewollte Betätigung eines Aktivierungstasters des Elektrogerätes nicht zu einem Aktivieren der Elektrokomponenten des Gerätes führt und dass die Transportsicherung durch eine an dem Gerät (1) vorgesehene Tastenbetätigung aktiviert wird.

2. Akkumulatorbetriebenes Elektrogerät (1) mit einem Akkumulator, einer Transportsicherung zur Verhinderung einer Entladung des Akkumulators (4) beispielsweise auf einem Transportweg, gegebenenfalls mit einem mit dem Elektrogerät oder einem Akkumulator des Elektrogerätes zusammenschaltbaren Ladegerät, wobei der Akkumulator (4) oder das Elektrogerät (1) eine elektrische Entladeschutzschaltung aufweist, wobei weiter die Transportsicherung durch eine Beeinflussung der Entladeschutzschaltung aktivierbar ist und durch ein nachfolgendes Laden des Akkumulators (4) deaktivierbar ist, **dadurch gekennzeichnet, dass** mit der Transportsicherung eine gewollte oder ungewollte Betätigung eines Aktivierungstasters des Elektrogerätes nicht zu einem Aktivieren der Elektrokomponenten des Gerätes führt und dass die Transportsicherung durch eine an dem Gerät (1) vorgesehene Tastenbetätigung aktivierbar ist.

3. Elektrogerät nach einem der Ansprüche 1 oder 2, **dadurch gekennzeichnet, dass** das Elektrogerät (1) und/oder ein mit dem Elektrogerät (1) oder einem Akkumulator (4) des Elektrogeräts (1) zusammenschaltbare Ladegerät (9) einen Microcontroller (14) aufweist und dass der Microcontroller (14) bei Erfassen eines Ladestroms die Transportsicherung deaktiviert.

4. Elektrogerät nach einem der Ansprüche 1 bis 3, **dadurch gekennzeichnet, dass** das Elektrogerät (1) einen Elektromotor (3) aufweist und dass die Transportsicherung aus einem die Spannungsversorgung des Elektromotors (3) des Gerätes (1) unterbrechenden Schalter (15) besteht.

5. Elektrogerät nach einem der Ansprüche 1 bis 4 **dadurch gekennzeichnet, dass** die Transportsicherung wahlweise aktivierbar ist.

6. Kombination aus einem Ladegerät (9) für ein akkumulatorbetriebenes Elektrogerät (1) und einem akkumulatorbetriebenen Elektrogerät (1) mit einer Transportsicherung, zur Verhinderung einer Entladung des Akkumulators (4) beispielsweise auf einem Transportweg, wobei der Akkumulator (4) oder das Elektrogerät (1) eine elektrische Entladeschutzschaltung aufweist, wobei weiter die Transportsicherung durch eine Beeinflussung der Entladeschutzschaltung aktivierbar ist und durch ein nachfolgendes Laden des Akkumulators (4) deaktivierbar ist, **dadurch gekennzeichnet, dass** die Entladeschutzschaltung einen die Spannungsversorgung des Gerätes (1) unterbrechenden, mechanischen Schalter (18) aufweist und dass das Ladegerät (9) ein Einwirkungsteil (19) aufweist, zur Betätigung des Schalters (18).

7. Kombination nach Anspruch 6, **dadurch gekennzeichnet, dass** die Transportsicherung wahlweise aktivierbar ist.

## Claims

1. Method for forming a transport safety system in an electrical device (1) operated by a battery (4), for preventing discharge of the battery (4) for example during transport, wherein the battery (4) or the electrical device (1) has an electrical discharge protection circuit, and the transport safety system is activated by influencing of the discharge protection circuit and is deactivated by subsequent charging of the battery (4), **characterized in that** the transport safety system provides that a wanted or unwanted actuation of an activating button of the electrical device does not lead to activation of the electrical components of the device and that the transport safety system is activated by a button actuation provided on the device (1).

2. Battery-operated electrical device (1) with a battery, transport safety system for preventing discharge of the battery (4) for example during transport, optionally with a charging device which can be connected to the electrical device or a battery of the electrical device, wherein the battery (4) or the electrical device (1) has an electrical discharge protection circuit, wherein furthermore the transport safety system can be activated by influencing of the discharge protection circuit and can be deactivated by a subsequent charging of the battery (4), **characterized in that** the transport safety system provides that a wanted or unwanted actuation of an activating button of the electrical device does not lead to activation of the electrical components of the device and that the transport safety system can be activated by a button actuation provided on the charging device (9).

3. Electrical device according to one of Claims 1 or 2, **characterized in that** the electrical device (1) and/or a charging device (9) which can be connected to the electrical device (1) or a battery (4) of the electrical device (1) has a microcontroller (14) and that the microcontroller (14) deactivates the transport safety system when a charging current is detected.

4. Electrical device according to one of Claims 2 to 4, **characterized in that** the electrical device has an electric motor (3) and that the transport safety system consists of a switch (15) which interrupts the voltage supply to the electric motor (3) of the device (1).

5. Electrical device according to one of Claims 1 to 4, **characterized in that** the transport safety system can be activated selectively.

6. Combination of a charging device (9) for a battery-operated electrical device (1) and a battery-operated electrical device (1) with a transport safety system, for preventing discharge of the battery (4) for example during transport, wherein the battery (4) or the electrical device (1) has an electrical discharge protection circuit, wherein furthermore the transport safety system can be activated by influencing of the discharge protection circuit and can be deactivated by subsequent charging of the battery (4), **characterized in that** the discharge protection circuit has a mechanical switch (18) which interrupts the voltage supply to the device (1) and that the charging device (9) has an active part (19) for actuating the switch (18).

7. Combination according to Claim 6, **characterized in that** the transport safety system can be activated selectively.

## Revendications

1. Procédé pour réaliser une sécurité de transport d'un appareil électrique (1) alimenté par un accumulateur ou une batterie d'accumulateurs (4), pour empêcher la décharge de l'accumulateur ou batterie (4) par exemple sur un trajet de transport, dans lequel l'accumulateur ou batterie (4) ou l'appareil électrique (1) comprend un circuit de protection contre la décharge et la sécurité de transport est activée en agissant sur le circuit de protection contre la décharge et est désactivée par une charge subséquente de l'accumulateur ou batterie (4), **caractérisé en ce que** la sécurité de transport a pour effet que l'actionnement volontaire ou involontaire d'un bouton d'activation de l'appareil électrique ne provoque pas une activation des composants électriques de l'appareil et **en ce que** la sécurité de transport est activée par un actionnement de bouton(s) de l'appareil (1).

2. Appareil électrique (1) alimenté par accumulateur ou batterie d'accumulateurs, comprenant un accumulateur ou batterie d'accumulateurs, une sécurité de transport pour empêcher la décharge de l'accumulateur ou batterie (4) par exemple sur un trajet de transport, et le cas échéant un chargeur susceptible d'être connecté avec l'appareil électrique ou un accumulateur ou batterie d'accumulateurs de l'appareil électrique, dans lequel l'accumulateur ou batterie (4) ou l'appareil électrique (1) comprend un circuit de protection contre la décharge, dans lequel en outre la sécurité de transport peut être activée en agissant sur le circuit de protection contre la décharge et peut être désactivée par une charge subséquente de l'accumulateur ou batterie (4), **caractérisé en ce que** la sécurité de transport a pour effet que l'actionnement volontaire ou involontaire d'un bouton d'activation de l'appareil électrique ne provoque pas une activation des composants électriques de l'appareil et que la sécurité de transport est activable par un actionnement d'un bouton de l'appareil (1).

3. Appareil électrique selon l'une des revendications 1 ou 2, **caractérisé en ce que** l'appareil électrique (1) et/ou un chargeur (9) susceptible d'être connecté avec l'appareil électrique (1) ou un accumulateur ou batterie d'accumulateurs (4) de l'appareil électrique, comprend un microcontrôleur (14) et **en ce que** le microcontrôleur (14) désactive la sécurité de transport sur détection d'un courant de charge.

4. Appareil électrique selon l'une des revendications 1 à 3, **caractérisé en ce que** l'appareil électrique (1) comprend un moteur électrique (3) et **en ce que** la sécurité de transport est constituée d'un interrupteur qui interrompt l'alimentation du moteur électrique (3) de l'appareil (1).

5. Appareil électrique selon l'une des revendications 1 à 4, **caractérisé en ce que** la sécurité de transport est activable de manière sélective.

6. Combinaison d'un chargeur pour appareil électrique (1) alimenté par accumulateur ou batterie d'accumulateurs et un appareil électrique (1) alimenté par accumulateur ou batterie d'accumulateurs, comprenant une sécurité de transport pour empêcher la décharge de l'accumulateur ou batterie (4) par exemple sur un trajet de transport, dans lequel l'accumulateur ou batterie (4) ou l'appareil électrique (1) comprend un circuit de protection contre la décharge, dans lequel en outre la sécurité de transport peut être activée en agissant sur le circuit de protection contre la décharge et peut être désactivée par une charge subséquente de l'accumulateur ou batterie (4), **caractérisée en ce que** la sécurité de transport comprend un interrupteur mécanique (18) qui interrompt l'alimentation de l'appareil (1) et **en ce que** le chargeur (9) comprend un élément d'actionnement (19) pour actionner l'interrupteur (18) .

7. Combinaison selon la revendication 6, **caractérisée en ce que** la sécurité de transport est activable de manière sélective.
